# EUROPÄISCHE PATENTSCHRIFT

(11) **EP 2 382 303 B1**
(45) Veröffentlichungstag und Bekanntmachung des Hinweises auf die Patenterteilung: **18.04.2018**
(21) Anmeldenummer: 10701321.1
(22) Anmeldetag: 22.01.2010
(51) Int. Cl.: C12C 12/04, C12G 3/02, A23L 2/52, A23L 2/56, A23L 2/68, A23L 2/72, A23L 2/84, C12C 12/00, C12C 11/00, C12R 1/645, C12R 1/225, C12N 1/16

(54) **VERFAHREN ZUR HERSTELLUNG EINES GETRÄNKES**
METHOD FOR PRODUCING A BEVERAGE
PROCÉDÉ DE PRODUCTION D'UNE BOISSON

(30) Priorität: 23.01.2009 DE 102009005971; 29.05.2009 DE 102009023209
(43) Veröffentlichungstag der Anmeldung: 02.11.2011
(73) Patentinhaber: Technische Universität Berlin, 10623 Berlin (DE)
(72) Erfinder: KUNZ, Thomas, 10178 Berlin (DE); METHNER, Frank-Jürgen, 54634 Bitburg (DE)
(74) Vertreter: Engelhard, Markus
(86) Internationale Anmeldenummer: PCT/EP2010/000394
(87) Internationale Veröffentlichungsnummer: WO 2010/084018

(56) Entgegenhaltungen:
- EP-A1- 0 355 523
- WO-A2-2009/124529
- DD-A5- 288 619
- DE-A1- 3 506 198
- DE-A1- 4 012 000
- DE-A1- 10 256 166
- DE-A1-102004 045 500
- DE-A1-102007 000 909
- DE-C1- 4 244 596
- DE-C1- 4 406 087
- GB-A- 2 270 525
- US-A- 1 898 047

## Beschreibung

Die Erfindung betrifft ein Verfahren zur Herstellung eines fermentierten Getränks auf einer Malz-Würzebasis.
Der Markt der alkoholfreien Getränke hat sich in den letzten Jahren aufgrund des Wechsels in den Konsumgewohnheiten der Bevölkerung stark verändert. Basierend auf neuen medizinischen Erkenntnissen hat sich in diesem Zusammenhang auch das Gesundheitsbewusstsein der Menschen weiterentwickelt, so dass neue Trends entstanden sind, die sich auch in einem verstärkten Konsum von so genannten Bio-, Öko-, präbiotischen und probiotischen Lebensmitteln widerspiegeln. Dies führt dazu, dass Produkte gesundheitlich förderlichen Eigenschaften verstärkt nachgefragt werden. US2898047 offenbart ein Verfahren zur Herstellung alkoholarmer Biere, wobei die Bierwürze mit einer Maltose-negativen Hefe vergoren wird. DE102004045500 betrifft ein Verfahren zur Herstellung eines Getränks unter Verwendung des Kombucha-Teepilzes. DD288619 lehrt ebenfalls die Bierherstellung mit Maltose-negativen Hefen. DE102007000909, DE4012000 und DE4406087 lehren alkoholfreie Getränke. Anstelle von Getränken, bei denen Wasser mit Fruchtsäften oder Fruchtauszügen oder deren Ersatzstoffen sowie mit Zucker oder Süßstoffen versetzt werden, besteht ein Bedürfnis nach einem Getränk mit niedrigem Alkoholgehalt, dass auf biologischem Weg aus Naturprodukten hergestellt wird.

### Zusammenfassung der Erfindung

Demgemäß lag der vorliegenden Erfindung die Aufgabe zu Grunde, ein Getränk mit niedrigem Alkoholgehalt bereitzustellen, dass auf biologischem Weg aus Naturprodukten hergestellt wird.
Die Aufgabe der Erfindung wird durch ein Verfahren zur Herstellung eines Getränkes, wie in den Ansprüchen beansprucht.
Erfindungsgemäß weist das Verfahren die folgenden Schritte auf:
Zunächst wird Malz bereitgestellt. Dann wird das Malz zu einer Würze verarbeitet, die schließlich mittels mindestens einer Hefe vergoren wird, die eine so genannte Maltose-negative Hefe ist, die keine Maltose vergärt bzw. unter den hier genannten Verfahrensparametern keine Maltose vergärt. Erfindungsgemäß ist die Maltose-negative Hefe zur Fermentierung der Würze eine Hefe der Gattung Saccharomycodes, sp. Ludwigii. Vorteilhafter Weise ist das Würzearoma im erhaltenen Getränk nicht mehr vorhanden. Die Verwendung Maltosenegativer Hefen führt zu einem Getränk mit Malzgeschmack.
Erfindungsgemäß wird mindestens ein Teil der Würze mit einem Lactobacillus spp. zur Erzeugung von Milchsäure vergoren oder weist den Schritt der Zugabe von Milchsäure zu der Würze auf.
Der Alkoholgehalt des Getränkes kann abhängig vom Zeitpunkt des Abbruchs der Fermentation variieren. Bevorzugt ist es, dass das Getränk einen Ethanolgehalt von unter 0,5 Vol-%, insbesondere von unter 0,3 Vol-% aufweist.
Die erfindungsgemäß verwendete malzbasierte Würze ist eine geeignete Basis zur Herstellung gesundheitsfördernder Getränke, da sie einen hohen Gehalt an energiereichen Kohlenhydraten, Polyphenolen, essentiellen Aminosäuren, Vitaminen und Mineralien beinhaltet. Darüber hinaus eignen sich die natürlichen Eigenschaften der Würze für Wachstum und Gärung von vielen Mikroorganismen, wie den Hefen.

Das präbiotisch wirkende, fermentierte Getränk stellt eine neuartige "Malz-Limo" dar, die bernsteinfarben, spritzig, mit fester Schaumkrone und alkoholfrei produziert werden kann. Auf dieser natürlichen, angenehm fruchtig-süßlich schmeckenden Basis, die bei Verwendung geeigneter Rohstoffe auch als "Bio"-Produkt hergestellt werden kann, besteht die Möglichkeit, durch Ausmischung und Aromatisierung zahlreiche Farb- und Geschmacksvariationen zu erhalten.
Die malzbasierte Würze kann mit verschiedenen Malzsorten, optional zusammen mit mindestens einer Rohfruchtsorte (beispielsweise mindestens einer Gerstensorte), hergestellt werden. In Frage kommen z. B. Gerstenmalz (Pilsener Malz), Roggenmalz, Farbmalz und/oder Röstmalz in unterschiedlichen Zusammensetzungen. So kann beispielsweise 0 % bis 100 % Gerstenmalz verwendet werden. Sofern unter 100 % Gerstenmalz eingesetzt werden, kann der an 100 % fehlende Anteil ein anderes Malz ergänzt werden, so durch Roggenmalz mit einem Anteil von 0 % bis 50 % und/oder durch Farb-, Aroma- und/oder Melanoidinmalz mit einem Anteil von 0 % bis 20 % und/oder durch Röstmalz mit einem Anteil von 0 % bis 10 % ergänzt werden. Die Zusammensetzung des Malzes wirkt sich vor allem auf die Farbe und den Geschmack des mit dem Verfahren erhaltenen Getränkes auf.

Bevorzugter Weise ist die malzbasierte Würze eine ungehopfte malzbasierte Würze. Sofern das erfindungsgemäße Verfahren zur Herstellung von alkoholfreiem Bier und Getränken mit bitterer Geschmacksnote verwendet wird, kann die malzbasierte Würze auch Hopfen enthalten. Das erfindungsgemäße alkoholfreie Bier kann eine Bitterkeit von unter 40 Bittereinheiten, bevorzugt von 20 bis 31 Bittereinheiten, besonders bevorzugt von 26 Bittereinheiten aufweisen. Das erfindungsgemäße alkoholfreie Bier wird mit einem Extraktgehalt von unter 10 %, bevorzugt von 3 bis 9 %, besonders bevorzugt von 5 bis 7 % hergestellt.

Neben der Herstellung des Getränkes auf der Grundlage einer nur auf Malz basierenden Würze, kann, wie oben erwähnt, die Würze auch mindestens einen Rohfruchtanteil, wie beispielsweise Gerste, Reis und/oder Mais aufweisen oder enthalten. Gerste ist als Rohfruchtanteil bevorzugt.

Bei der Verwendung von Rohfrucht wird der zur Würzeherstellung verwendete Malzanteil um den zugegebenen Anteil Rohfrucht reduziert. Erfindungsgemäß können 1 % bis 50 % Rohfrucht zu 99 % bis 50 % Malz hinzu gegeben werden (so dass der Anteil von Rohfrucht und Malz zusammen 100 % ergibt).

Für die Fermentation der Würzen, die mittels verschiedener Malze nach unterschiedlicher Aufarbeitung und optional unter Beteiligung eines Rohfruchtanteils (wie z. B. Gerste) hergestellt werden können, können für variierende Grundgeschmacksrichtungen verschiedene Hefen zum Einsatz kommen.

Erfindungsgemäß ist die maltosenegative Hefe zur Fermentierung der Würze eine Hefe der Gattung Saccharomycodes, sp. Ludwigii.

| Gattung | Spezies |
|---|---|
| Saccharomyces Hansen | S. ludwigii |
| Synonym: Saccharomyces ludwigii Hansen var. vini Kroemer et Heinrich (1922) | |

Es gibt auch andere Maltose-negative Stämme (insbesondere Saccharomyces Meyen ex Rees, Pichia Hansen, etc.).

Die eingesetzte nicht Maltose vergärende Hefe zeichnet sich insbesondere durch eine geringe Alkoholbildung aus, so dass das durch die Fermentation erhaltene Getränk einen Alkoholgehalt von < 0,5 Vol-%, bevorzugt von < 0,3 Vol-% aufweist. Zur Herstellung des Getränks wird die Gärung demgemäß zu einem Zeitpunkt beendet, an dem der Alkoholgehalt bei < 0,5 Vol- %, bevorzugt bei < 0,3 Vol-% liegt.

Auch die biotechnologische Gärung mittels anderer Mikroorganismen kann zu biochemischen Produkten führen, die eine positive Auswirkung auf die menschlichen Stoffwechselwege haben. Daher werden erfindungsgemäß Milchsäurebakterien zur Fermentation mindestens eines Teils der Würze eingesetzt, da die positiven Eigenschaften von Milchsäurebakterien bekannt sind. Allerdings bringt die Anwendung von Lactobacillen in einer Würzefermentation eine besondere Betrachtung derer Empfindlichkeit gegenüber mikrobizid wirkenden Stoffen, wie z. B. dem Hopfen mit sich. Daher wird in einer bevorzugten Ausführungsform der Erfindung bei der Herstellung des Getränkes kein Hopfen verwendet. Das anspruchvolle Nährstoffbedürfnis der Milchsäurebakterien wird durch die hier verwendete Würze komplett abgedeckt.

Das erfindungsgemäße Verfahren kann auch zur Herstellung von alkoholfreiem Bier verwendet werden. Dazu kann eine gehopfte Malz-Würzebasis verwendet werden, um dem alkoholfreien Bier einen herben Geschmack zu verleihen. Dabei weist das erfindungsgemäße alkoholfreie Bier eine Bitterkeit von unter 40 Bittereinheiten, bevorzugt von 20 bis 31 Bittereinheiten, besonders bevorzugt von 26 Bittereinheiten auf. Das erfindungsgemäße alkoholfreie Bier wird mit einem Extraktgehalt von unter 10 %, bevorzugt von 3 bis 9 %, besonders bevorzugt von 5 bis 7 % hergestellt.

Es ist sowohl möglich, die gesamte Würze von Milchsäurebakterien fermentieren zu lassen, oder, bevorzugt, nur einen Teil der Würze von Milchsäurebakterien fermentieren zu lassen und nach erfolgter Milchsäurefermentation zu dem milchsäurefreien, aber mit mindestens einem Maltose-negativen Hefestamm fermentierten anderen Teil der Würze hinzu zu geben. Alternativ kann eine Zugabe von Milchsäure zu der Würze erfolgen, so dass keine Milchsäurebakterien verwendet werden müssen. Die Zugabe der synthetischen Milchsäure kann in einem Bereich von 0,01 ml bis 0,18 ml Milchsäure, bevorzugt im Bereich von 0,9 ml bis 0,13 ml Milchsäure pro 100 ml Würze liegen, und ggf. in Abhängigkeit zu einer hinzu zu gebenden Aromenausmischung während der Ausmischung erfolgen. Bevorzugt ist die Zugabe von L+ Milchsäure.

Der Abbruch der Fermentation (Schlauchen) erfolgt bevorzugt unter Berücksichtigung verschiedener, unten detailliert beschriebener Produktionsparameter, wie Extraktabbau, pH-Wert und/oder Fermentationsdauer. Im Anschluss kann eine Ausmischung der mittels Hefe bzw. Milchsäurebakterien fermentierten Würze unter Zugabe zusätzlicher Aromen (Zitrone, Apfel, Grantapfel, Ingwer, Ananas etc.) und/oder Ascorbinsäure erfolgen.

Bevorzugt wird das erhaltene Getränk nach Abschluss der Fermentation und einer Ausmischung der getrennt mit Milchsäurebakterien und Hefe fermentierten Würze vor einem eventuellen Aromenzusatz über mindestens einen Faltenfilter filtriert. Im Anschluss kann das Getränk über mehrere Tage aufkarbonisiert werden. Nach ausreichender Karbonisierung kann eine Flaschenabfüllung und Pasteurisation erfolgen. Bei der Zugabe von speziellen Aromenzusätzen bzw. Säften, die eine weitere Trübungsbildung zur Folge haben, werden diese vor der Filtration in die ausgemischte Würze zugesetzt.

Zur Durchführung des erfindungsgemäßen Verfahrens sind keine besonderen technischen oder instrumentellen Voraussetzungen zu verfüllen. Das Verfahren kann daher von jeder Brauerei, die dem normalen Standard entspricht, durchgeführt werden.

Es wird ein Getränk beschrieben, das mittels eines hierin beschriebenen Verfahrens herstellbar ist.

Dieses Getränk besitzt aufgrund der geringen Alkoholbildung der eingesetzten Hefen bevorzugt einen Alkoholgehalt von < 0,5 Vol % und kann als alkoholfrei deklariert werden. Es hat einen hohen Gehalt an energiereichen Kohlenhydraten, Polyphenolen, essentiellen Aminosäuren, Vitaminen und Mineralien. Im Gegensatz zu Limonaden wird das erfindungsgemäße Getränk auf natürlicher Basis ohne Zuckerzusatz hergestellt und hat bei Verwendung eines Rohfruchtanteils aufgrund einer maßgeblich geringeren Stammwürze gegenüber den herkömmlichen Malzgetränken einen um bis zu 30 % geringeren Kaloriengehalt. Aufgrund der ausgewogenen Zusammensetzung gewährt das Getränk eine vorzügliche Verträglichkeit.

Da in dem Getränk die für den Kohlenhydratstoffwechsel wichtigsten Vitamine des B-Komplexes, ferner Biotin sowie lebenswichtige Mineralstoffe wie Magnesium, Calcium, Phosphor und Kalium und wertvolle Eiweißbestandteile vorhanden sind, eignet sich dieses Getränk im Besonderen für den wachsenden Organismus und kann neben den Erwachsenen auch Kindern und Jugendlichen angeboten werden. Der erhöhte Polyphenolgehalt wirkt nachweislich antikanzerogen, antioxidativ, entzündungshemmend, blutdrucksteuernd und blutglucoseregulierend (Anton Piendl: Bier und Gesundheit, Neuere Erkenntnisse über die Vorzüge eines maßvollen Biergenusses; Shaker Verlag, Aachen 2008, S. 83).

Die Eigenschaften des Getränks ergeben sich auch aus der Beschreibung seines Herstellungsverfahrens.

### Detaillierte Beschreibung der Erfindung

Das mit dem erfindungsgemäßen Verfahren herstellbare Getränk basiert auf einer bevorzugter Weise ungehopften Malz-Würzebasis, die auch einen Rohfruchtanteil aufweisen kann. Als Rohfrucht ist besonders Gerste vorteilhaft. Eine bevorzugte Rezeptur zur Herstellung einer Würze kann Tabelle 2 entnommen werden.

**Tabelle 2: Eine bevorzugte Rezeptur zur erfindungsgemäßen Herstellung Getränks**

| ***Eingesetzter Rohstoff*** | ***In kg*/*30 kg Schüttung*** | ***In %*** | ***Schroten mit Walzenmühle [mm]*** |
|---|---|---|---|
| Pilsener Malz (Gerstenmalz) | 21 | 70 | 1,7 |
| Gerste | 4,5 | 15 | (vorher 5-8 min Einweichen, T_{H2O} = 20 °C) 1,0 |
| Roggenmalz | 3 | 10 | 0,7 |
| Farbmalz, Aromamalz, Melanoidinmalz | 1,5 | 5 | 1,7 |

### Malz- und Gerstenaufarbeitung

Neben der Rezeptur trägt die Malz- und ggf. Gerstenaufarbeitung zu einer gut funktionierenden Läuterarbeit bei und ist für die Herstellung und den besonderen Geschmack des erfindungsgemäßen Getränks von besonderer Bedeutung.

Vor der Verarbeitung des Malzes zu einer Würze wird das bereitgestellte Malz vorteilhafter Weise in einer Walzenmühle gemahlen. Dies geschieht bevorzugter Weise in einer Trockenschrotmühle. Die Abstände der Walzen in der Walzenmühle sind dabei in Abhängigkeit von der Malzsorte einzustellen. Die Erfinder haben gefunden, dass für die jeweiligen Malzsorten die folgenden Abstände von besonderem Vorteilhaft sind:

| | |
|---|---|
| Pilsener Malz (Gerstenmalz) | 1,6 mm bis 1,8 mm, bevorzugt 1,7 mm |
| Gerste | 0,9 mm bis 1,1 mm, bevorzugt 1,0 mm |
| Roggenmalz | 0,6 mm bis 0, 8 mm, bevorzugt 0,7 mm |
| Farbmalze | 1,6 mm bis 1, 8 mm, bevorzugt 1,7 mm. |

Sofern Gerste zur Herstellung der Würze als Rohfruchtanteil bereitgestellt wird, wird diese in einer bevorzugten Ausführungsform vor der Schrotung für 5 min bis 8 min, bevorzugt für 6 bis 7 min bei einer Temperatur von 18 bis 22 °C, bevorzugt von 20 °C in Wasser eingeweicht, um eine spezielle Spelzengröße zu erhalten, die den Läuterprozess erleichtert. Dies dient auch dazu, den notwendigen zusätzlichen Enzymeinsatz zum Abbau von bei einer Filtration störenden Polymeren bei der Verarbeitung von Rohfrucht zu vermeiden bzw. zu verringern.
Die oben beschriebenen Rezepturen können wie im Folgenden beschrieben verändert werden. Das Getränk kann in bevorzugten Ausführungsformen in verschiedenen farblichen Nuancen bereitgestellt werden. Dafür kann mindestens ein handelsübliches Farbmalz, Melanoidinmalz, Aromamalze (wie z. B. Carared®, Caraamber®, Caraaroma®, Münchner Hell®, Carahell®) oder ein äquivalentes Farbmalz verwendet werden. In einem anderen bevorzugten Verfahren wird der Anteil des genannten mindestens einen Farbmalzes, Melanoidinmalzes und/oder Aromamalzes bzw. der Farbmalzmischungen bis auf 10 % erhöht (wobei der Malz- bzw. Gerstenanteil entsprechend herabgesetzt wird).

**Tabelle 3: Eine bevorzugte Rezeptur zur erfindungsgemäßen Herstellung des Getränks mit unterschiedlicher Färbung**

| ***Eingesetzter Rohstoff*** | ***In kg*/*30kg Schüttung*** | ***In %*** | ***Schroten mit Walzenmühle [mm]*** |
|---|---|---|---|
| Pilsener Malz (Gerstenmalz) | 19,5 - 22,5 | 65 - 75 | 1,7 |
| Gerste | 3 - 6 | 10 - 20 | (vorher 5-8 min Einweichen, T_{H2O} = 20 °C) 1,0 |
| Roggenmalz | 3 | 10 | 0,7 |
| Farbmalz, Aromamalz, Melanoidinmalz | 0 - 3 | 0 - 10 | 1,7 |

**Tabelle 4: Eine besonders bevorzugte Rezeptur zur erfindungsgemäßen Herstellung eines Getränks mit unterschiedlicher Färbung**

| ***Eingesetzter Rohstoff*** | ***In kg*/*30kg Schüttung*** | ***In %*** | ***Schroten mit Walzenmühle [mm]*** |
|---|---|---|---|
| Pilsener Malz (Gerstenmalz) | 21 | 70 | 1,7 |
| Gerste | 3 | 10 | (vorher 5-8 min Einweichen, TH2O = 20 °C) 1,0 |
| Roggenmalz | 3 | 10 | 0,7 |
| Melanoidinmalz | 3 | 10 | 1,7 |

Für die Zubereitung eines Kwas-ähnlichen Getränks kann bei der in Tabelle 3 genannten Rezeptur der Melanoidinmalz- bzw. Farbmalzanteil je nach Geschmacksrichtung von 1 % bis 5 % durch Röstmalz ersetzt und der Roggenmalzanteil auf bis zu 30 % erhöht werden, wobei der Gersten- und Malzanteil entsprechend herabgesetzt wird (siehe Tabelle 5).

**Tabelle 5: Eine weitere besonders bevorzugte Rezeptur zur erfindungsgemäßen Herstellung eines Getränks (Kwas-ähnliches Getränk)**

| ***Eingesetzter Rohstoff*** | ***In kg*/*30kg Schüttung*** | ***In %*** | ***Schroten mit Walzenmühle [mm]*** |
|---|---|---|---|
| Pilsener Malz (Gerstenmalz) | 21 | 65 | 1,7 |
| Gerste | 3 | 10 | (vorher 5-8 min Einweichen, T_{H2O} = 20 °C) 1,0 |
| Roggenmalz | 4,5 | 15 | 0,7 |
| Farbmalz, Aromamalz, Melanoidinmalz | 1,8 | 6 | 1,7 |
| Röstmalz | 1,2 | 4 | 1,4 |

### Maischverfahren

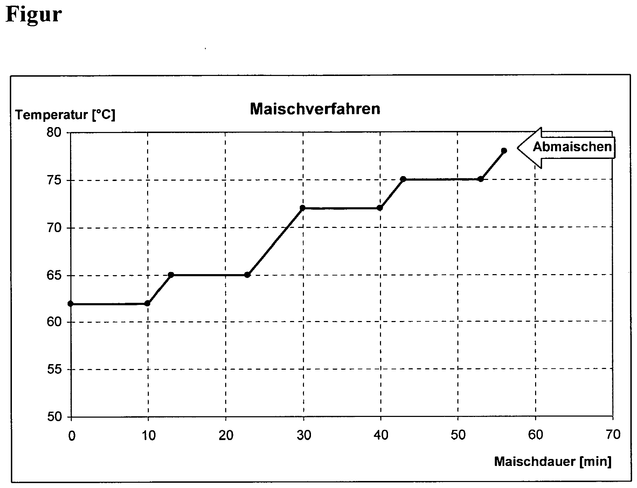

Zur erfindungsgemäßen Herstellung des Getränks kann das in Figur 1 dargestellte Maischverfahren vorteilhaft verwendet werden, um eine gute Läuterarbeit und Ausbeute zu gewährleisten. Durch die beschriebene Rohstoffaufarbeitung und der Anwendung des in der Figur 1 dargestellten Maischverfahrens sind Schwierigkeiten bei der Läuterarbeit auszuschließen. In Anlehnung an das dargestellte Maischverfahren können aber auch Maischverfahren mit längeren Rastzeiten eingesetzt werden. Bei der Getränkeherstellung insbesondere mit Rohfruchtanteil führen kürzere Rasten zu einer Verschlechterung der Läuterarbeit und Ausbeute.

### Enzymzugabe

Zur Verbesserung der Läuterarbeit ist es vorteilhaft, ab einem Gesamtanteil an Roggenmalz und Gerste von > 15 % mindestens ein Enzym zum Polymerabbau (wie z. B. von Glukanen) hinzugegeben, bevorzugt ein Gemisch aus β-Glucanase und Xylanase (z. B. das Enzym Ultraflo® Max (Novozymes, Dänemark) oder äquivalente Enzyme), bevorzugt in einer Konzentration von 1,0 bis 1,5 g/kg, besonders bevorzugt in einer Konzentration von 1,25 g/kg (nur bezogen auf den Anteil Gerste und Roggenmalz). Die Zugabe erfolgt im Maischverfahren bevorzugt bei 65 °C. Sofern für die Zubereitung des erfindungsgemäßen Getränks der Gerstenanteil auf bis 30 % erhöht wird, wird die Enzymzugabe vorteilhafter Weise entsprechend angeglichen.

Bei hohen Gerste- und Roggenmalzanteilen (> 30 % Gerste, > 20 % Roggenmalz) ist es vorteilhaft, zusätzlich handelsübliche Enzyme wie Protease, Amylase, Pullulanase (Pullulan-6-glucanohydrolase), Peptidase und/oder Pentosanase zu Beginn des Maischverfahrens zuzugeben. Bevorzugter Weise werden Protease, Amylase und Pullulanase zu Beginn des Maischverfahrens zugesetzt (z. B. Neutrase®, Termamyl Brew Q®, Termamyl® SC, Promozyme etc. (Novozymes, Dänemark) oder äquivalente Enzyme der gleichen bzw. anderer Hersteller).

### Läutern und Kochung

Bei dem Verfahren muss bis zur "Pfanne voll" geläutert werden. Danach wird die Würze wahlweise mit oder bevorzugt ohne Hopfenzugabe bei 100 °C, maximal für 60 min, bevorzugt für 20 min gekocht und der Extraktgehalt der Würze je nach gewünschter Süße und Vollmundigkeit auf einen Wert von 7 bis 10 % GG eingestellt (% GG = Wirklicher Extrakt in Gewichtsprozent). Bevorzugt wird der Extrakt zwischen 8,8 - 9,2 % GG eingestellt. Danach verbleibt die Würze bevorzugt für 15 bis 30 min in einem Whirlpool bevor eine Abkühlung, insbesondere auf 10 °C erfolgt.

### Fermentation

Für die Fermentation der Würzen, die mittels verschiedener Malze nach unterschiedlicher Aufarbeitung und optional unter Beteiligung eines Rohfruchtanteils (wie z. B. Gerste) hergestellt werden können, können für variierende Grundgeschmacksrichtungen verschiedene Hefen zum Einsatz kommen. Die hierbeit eingesetzten Hefen der Gattung Saccharomycodes, sp. Ludwigii zeichnen sich insbesondere durch eine niedrige Alkoholproduktion und eine höhere Produktion an organischen Säuren und Fruchtestern aus.

Durch eine gezielte Fermentationssteuerung wird gewährleistet, dass ein Alkoholgehalt von <0,5 Vol-% erhalten wird. Dabei sind die Produktionsparameter zum gezielten Fermentationsabbruch von dem verwendeten Hefestamm abhängig:

**Fermentationsbedingungen (Hefe)**

| | |
|---|---|
| Hefeanstellzellzahl: | 6 x 10⁵ Zellen/ml |
| Fermentationstemperatur: | 10 - 12 °C |
| Fermentationszeit: | 48 - 168 h für Hefestämme der Gattung Saccharomycodes, sp. Ludwigii. |
| Fermentationstemperatur: | 20 °C - 28 °C |
| Fermentationszeit: | 24 - 96 h für Hefestämme der Gattung Saccharomycodes, sp. Ludwigii. |

Der Abbruch der Fermentation (Schlauchen) erfolgt in Abhängigkeit zum Hefestamm nach einem Extraktabbau von 0,4 - 1,1 % GV, bevorzugt 0,6 - 0,9 % GV und in einem pH-Wert-Bereich von 4,5 bis 5,3, bevorzugt von 4,9 bis 5,1.

Zur Herstellung des gewünschten Milchsäureanteils wird mindestens ein Teil der malzbasierten Würze mit einem Lactobacillusstamm fermentiert und später ggf. mit milchsäurefreier Würze.

**Fermentationsbedingungen (Lactobacillus)**

| | |
|---|---|
| Fermentationszeit: | 72 - 96 h |
| Fermentationstemperatur: | 20 - 36 °C (bevorzugt 26 °C) |
| Hefeanstellzellzahl: | 6 x 10⁵ Zellen/ml |

Der Abbruch der Fermentation erfolgt nach Erreichen eines pH-Wertes im Bereich von 3,3 bis 3,9, bevorzugt 3,4 bis 3,7.

### Ausmischung

Ist die Fermentation auf der Basis der jeweiligen Produktionsparameter beendet, wird das Getränk geschlaucht und kann im Anschluss mit der Lactobacillus fermentierten Würze ausgemischt werden, bis der gewünschte pH-Wert, insbesondere von 3,8 - 4,2 erreicht wird. Des Weiteren kann dem Getränk Ascorbinsäure in einer Konzentration von bis zu 30 mg/l zugegeben werden. Besonders bevorzugt wird Ascorbinsäure in einer Konzentration von 20-25 mg/l zugegeben.

In einer Variante des Verfahrens erfolgte die Fermentation der Malz-Gersten Würzebasis ausschließlich über die verschieden eingesetzten Hefen und die Milchsäure wird nicht durch eine Milchsäurefermentation hergestellt, sondern als synthetische Milchsäure während der Ausmischung in einem Bereich von 0,01 ml bis 0,18 ml, bevorzugt 0,9 ml bis 0,13 ml Milchsäure pro 100 ml Würze zugesetzt. Grundsätzlich muss die Milchsäurezugabe in einem vorgegebenen Bereich an die spätere Aromenausmischung angepasst werden (z. B. bei einer Ausmischung mit Zitronenaroma entsprechend herabgesetzt werden).

Im Anschluss kann das erhaltene Getränk nach Abschluss der Fermentation und einer Ausmischung der getrennt mit Milchsäurebakterien und Hefe fermentierten Würze unter Zugabe zusätzlicher Aromen (wie z. B. Zitrone, Granatapfel, Ananas, Himbeere, Apfel, Ingwer, Pfirsich, usw.) vor bzw. nach der Filtration ausgemischt werden. Bevorzugt wird das erhaltene Basisgetränk über mindestens einen Faltenfilter filtriert und in einer Ausführungsform im Anschluss nach der Ausmischung über mehrere Tage aufkarbonisiert.

Die Ausmischung mit den zusätzlichen Aromen kann vor und nach der Filtration erfolgen, um die aromatisierten Getränke zu erhalten. Hierbei ist jedoch zu berücksichtigen, dass bestimmte Aromen, wie z. B. das Ingweraroma oder Frischsäfte zu einer leichten Trübungsbildung im Getränk führen können. Für solche Aromen ist daher eine Ausmischung vor der Filtration durchzuführen, um ein klares Getränk zu erhalten. Das so hergestellte Getränk (ohne Aromenzusatz) bzw. das aromatisierten Getränke wird über mindestens einen, bevorzugt über verschiedene Faltenfilter filtriert.

### Filtration

Die Filtration verläuft bevorzugt in Reihe über filterhilfsmittelfreie Filterkerzen mit einer mittleren Porengröße im Bereich von 0,5 µm bis 3,5 µm, bevorzugt mit einer mittleren Porengröße von 3,0 µm, 0,8 µm oder 0,6 µm.

### Aufkarbonisierung, Abfüllung, Pasteurisation

Nach der Filtration und Ausmischung kann das Getränk aufkarbonisiert und 96 Stunden im Kühlhaus, bevorzugt bei 1 °C bis 10 °C gelagert werden.

Nach ausreichender Karbonisierung kann die Flaschenabfüllung und Pasteurisation (Flaschenpasteurisierung bis zu einem erreichen von 20 - 25 Pasteurisationseinheiten) erfolgen. Das so hergestellte Getränk besitzt aufgrund der geringen Alkoholbildung der eingesetzten Hefen einen Alkoholgehalt von < 0,5 Vol % und kann in Deutschland als "alkoholfrei" deklariert werden.

Die in der vorstehenden Beschreibung, den Ansprüchen und der Zeichnung offenbarten Merkmale der Erfindung können sowohl einzeln als auch in beliebiger Kombination für die Verwirklichung der Erfindung in ihren verschiedenen Ausführungsformen von Bedeutung sein.

### Figur

Die Figur stellt den Verlauf eines bevorzugten Maischverfahrens dar, das im Rahmen der erfindungsgemäßen Herstellung eines Getränkes durchgeführt werden kann. Der gezeigte Graph stellt die Maischtemperatur in °C über die Maischdauer in Minuten dar.

### Beispiele

a) Nachfolgend sind Analysewerte von Getränken dargestellt, die nach einer in Tabelle 1 gezeigten Rezeptur unter Verwendung einer Maltose-negativen Hefe hergestellt werden.
Die rechte Spalte gibt einen bevorzugten Bereich an, in dem sich die jeweiligen Werte bei verschiedenen Rezepturen bevorzugt befinden; die linke Spalte gibt einen möglichen Wert bzw. Bereich an. Z. B. sollte der Alkoholgehalt bevorzugt bei < 0,30 Vol-% liegen (s. rechte Spalte). Es kann vorkommen, dass der Wert >0,30 Vol-%, aber < 0,50 Vol-% (s. linke Spalte) beträgt (z. B. 0,40 Vol-%). Ein derartig erhöhter Alkoholgehalt kann auftreten, wenn z. B. die Filtration 6 bis 8 Stunden dauert. In diesem Zeitraum hat in dem letzten Keg-Fass einen Nachgärung stattgefunden, die zu einer Erhöhung um ca. 0,1 Vol-% geführt hat.

**Verwendete Hefe: - nicht Maltose vergärende Hefe**

| | | |
|---|---|---|
| Stammwürze: | 5 % - 14 % | (7%-10%) |
| Extrakt: | 4 % - 13 % | (6% - 9%) |
| Alkohol: | < 0,50 Vol% | (< 0,3 Vol%) |
| pH-Wert: | 3,4 - 4,5 | (3,4 - 4,1) |
| Farbe: | 4 - 90 EBC | (5 - 40 EBC) |
| Viskosität: | 1,1 - 1,9 mPa*s | (1,3 - 1,7 mPa*s) |
| Gesamtstickstoff (12 %): | 700 - 1100 mg/l | (800 - 1000 mg/l) |
| Koagulierbarer Stickstoff: | 15 - 45 mg/l | (20 - 40 mg/l) |
| Magnesiumfällbarer Stickstoff: | 150 - 280 mg/l | (170 - 260 mg/l) |
| Freier α-Amino-Stickstoff: | 50 - 150 mg/l | (60 - 120mg/l) |
| Polyphenole: | 90 - 200 mg/l | (100 mg/l - 180mg/l) |
| Anthocyanogene: | 25 - 80 mg/l | |
| Photometrische Jodprobe: | 0,10 - 0,50 dE | |

b) Nachfolgend ist das Analyseergebnis eines Getränks dargestellt, das nach der in Tabelle 2 gezeigten Rezeptur unter Verwendung einer Maltose-negativen Hefe der Gattung Saccharomycodes, sp. Ludwigii hergestellt wurde.

| | |
|---|---|
| Stammwürze: | 8,59 % |
| Alkohol: | < 0,50 % |
| pH-Wert: | 3,9 |
| Farbe: | 20 EBC (European Brewing Convention) |
| Viskosität: | 1,677 mPa*s |
| Gesamtstickstoff (12 %): | 865 mg/l |
| Koagulierbarer Stickstoff: | 26 mg/l |
| Magnesiumfällbarer Stickstoff: | 203 mg/l |
| Freier α-Amino-Stickstoff: | 88 mg/l |
| Polyphenole: | 117 mg/l |
| Anthocyanogene: | 30 mg/l |
| Photometrische Jodprobe : | 0,39 dE |

c) Nachfolgend ist das Analyseergebnis eines Getränks dargestellt, das nach der in Tabelle 3 gezeigten Rezeptur (mit 1 % Farbmalz) unter Verwendung einer Maltose-negativen Hefe der Gattung Saccharomycodes, sp. Ludwigii hergestellt wurde.

| | |
|---|---|
| Stammwürze: | 8,53 % |
| Alkohol: | < 0,50 % |
| pH-Wert: | 4,0 |
| Farbe: | 11 EBC (European Brewing Convention) |
| Viskosität: | 1,659 mPa*s |
| Gesamtstickstoff (12 %): | 933 mg/l |
| Freier α-Amino-Stickstoff: | 92 mg/l |
| Koagulierbarer Stickstoff: | 40 mg/l |
| Magnesiumfällbarer Stickstoff: | 242 mg/l |
| Polyphenole: | 132 mg/l |
| Anthocyanogene: | 30 mg/l |
| Photometrische Jodprobe : | 0,16 dE |

## Patentansprüche

1. Verfahren zur Herstellung eines Getränkes mit einem Ethanolgehalt von unter 0,5 Vol- %,
aufweisend die folgenden Schritte
a) Bereitstellung von Malz zur Herstellung einer Würze; und
b) Verarbeitung des Malzes zu einer Würze; und
c) Fermentierung der Würze mittels einer Maltose-negativen Hefe, wobei die Maltose-negative Hefe zur Fermentierung der Würze eine Hefe der Gattung Saccharomycodes, sp. Ludwigii ist,
wobei mindestens ein Teil der Würze mit einem Lactobacillus spp. zur Erzeugung von Milchsäure vergoren wird oder aufweisend den Schritt der Zugabe von Milchsäure zu der Würze.

2. Verfahren nach Anspruch 1, wobei neben Malz mit einem von dem Anteil von 99 % bis 50 % auch Rohfrucht zu einem von dem Malzanteil abhängigen Anteil von 1 % bis 50 % zur Verarbeitung zu einer Würze bereitgestellt wird, wobei der Anteil von Rohfrucht und Malz zusammen 100 % ergibt.

3. Verfahren nach Anspruch 1 oder 2, wobei das Malz besteht aus:
- Gerstenmalz mit einem Anteil von 0 % bis 100 %,
- Roggenmalz mit einem Anteil von 0 % bis 50 %,
- Farbmalz, Aromamalz und/oder Melanoidinmalz mit einem Anteil von 0 % bis 20 %, und/oder
- Röstmalz mit einem Anteil von 0 % bis 10 %.

4. Verfahren nach Anspruch 1 bis 3, wobei die Rohfrucht ausgewählt ist aus der Gruppe bestehend aus Gerste, Reis und Mais, wobei Gerste als Rohfrucht bevorzugt ist.

5. Verfahren nach Anspruch 1 bis 4, weiterhin aufweisend den Schritt der Zugabe von Milchsäure während der Ausmischung.

6. Verfahren nach Anspruch 1 bis 5, wobei der fermentierten Würze ein Aroma oder Ascorbinsäure zugegeben wird.

7. Verfahren nach Anspruch 1 bis 6, weiterhin aufweisend den Schritt der Filtration der fermentierten Würze.

8. Verfahren nach Anspruch 1 bis 7, weiterhin aufweisend den Schritt der Karbonisierung der fermentierten Würze.

9. Verfahren nach Anspruch 1 bis 8, weiterhin aufweisend den Schritt der Pasteurisation des Getränkes.

10. Verfahren nach Anspruch 1 bis 9, vor der Verarbeitung des Malzes zu einer Würze weiterhin aufweisend den Schritt des Walzens des Malzes mit einer Walzenmühle, die für die jeweiligen Malzsorten die folgenden Abstände aufweist:
| | |
|---|---|
| Pilsener Malz | 1,6 mm bis 1,8 mm, bevorzugt 1,7 mm |
| Gerste | 0,9 mm bis 1,1 mm, bevorzugt 1,0 mm |
| Roggenmalz | 0,6 mm bis 0, 8 mm, bevorzugt 0,7 mm |
| Farbmalz | 1,6 mm bis 1, 8 mm, bevorzugt 1,7 mm. |

11. Verfahren nach Anspruch 1 bis 10, weiterhin aufweisend den Schritt des Einweichens der Gerste in Wasser vor der Schrotung.

12. Verfahren nach Anspruch 1 bis 11, weiterhin aufweisend den Schritt der Zugabe eines Enzyms zum Abbau von Polymeren.

## Claims

1. A method for the production of a beverage with an ethanol content of less than 0.5 vol-%,
having the following steps
a) providing malt for producing a wort; and
b) processing the malt to a wort; and
c) fermenting the wort using a maltose-negative yeast, wherein the maltose-negative yeast for fermenting the wort is a yeast of the genus Saccharomycodes, sp. Ludwigii,
wherein at least a part of the wort is fermented with a Lactobacillus spp. for obtaining lactic acid, or having the step of adding lactic acid to the wort.

2. The method of claim 1, wherein for processing the wort in addition to malt with a content of 99 % to 50 % also unmalted grain is provided with a content, that is dependent on the malt content, of 1 % to 50 %, wherein the content of unmalted grain and malt is together 100 %.

3. The method of claim 1 or 2, wherein the malt consists of:
- barley malt with a content of 0 % to 100 %,
- rye malt with a content of 0 % to 50 %,
- colour malt, flavour malt and/or melanoidine malt with a content of 0 % to 20 %, and/or
- roasted malt with a content of 0 % to 10 %.

4. The method of claims 1 to 3, wherein the unmalted grain is selected from the group consisting of barley, rice and corn, wherein barley is preferred as the unmalted grain.

5. The method of claims 1 to 4, further having the step of adding lactic acid before the de-blending ("Ausmischung").

6. The method of claims 1 to 5, wherein an aroma or ascorbic acid is added to the fermented wort.

7. The method of claims 1 to 6, further having the step of filtrating the fermented wort.

8. The method of claims 1 to 7, further having the step of carbonation of the fermented wort.

9. The method of claims 1 to 8, further having the step of pasteurizing the beverage.

10. The method of claims 1 to 9, before the processing of the malt to a wort, further having the step of rolling the malt with a rolling mill, which has the following distances for the respective kinds of malt:
| | |
|---|---|
| Pilsener malt | 1.6 mm to 1.8 mm, preferably 1.7 mm |
| Barley | 0.9 mm to 1.1 mm, preferably 1.0 mm |
| Rye malt | 0.6 mm to 0.8 mm, preferably 0.7 mm |
| Colour malt | 1.6 mm to 1.8 mm, preferably 1.7 mm |

11. The method of claims 1 to 10, further having the step of soaking the barley in water before the crushing ("Schrotung").

12. The method of claims 1 to 11, further having the step of adding an enzyme for the decomposition of polymers.

## Revendications

1. Procédé servant à fabriquer une boisson présentant une teneur en éthanol inférieure à 0,5 % en volume,
présentant les étapes suivantes consistant à
a) fournir du malt afin de fabriquer un moût ; et
b) transformer le malt en un moût ; et
c) fermenter le moût au moyen d'une levure maltose-négative, dans lequel la levure maltose-négative servant à la fermentation du moût est une levure du genre *Saccharomycodes, sp. Ludwigii,*
dans lequel au moins une partie du moût est fermentée avec un *Lactobacillus spp.* afin de produire de l'acide lactique ou présentant l'étape consistant à ajouter de l'acide lactique au moût.

2. Procédé selon la revendication 1, dans lequel outre le malt présentant une fraction allant de 99 % à 50 %, des grains crus sont également fournis en une fraction dépendant de la fraction de malt allant de 1 % à 50 % aux fins de la transformation en un moût, dans lequel la fraction de grains crus et de malt donnent conjointement 100 %.

3. Procédé selon la revendication 1 ou 2, dans lequel le malt est constitué de :
- malt d'orge présentant une fraction allant de 0 % à 100 %,
- malt de seigle présentant une fraction allant de 0 % à 50 %,
- malt colorant, malt aromatique et/ou malt mélanoïdé présentant une fraction allant de 0 % à 20 %, et/ou
- malt torréfié présentant une fraction allant de 0 % à 10 %.

4. Procédé selon la revendication 1 à 3, dans lequel les grains crus sont choisis parmi le groupe constitué de l'orge, du riz et du maïs, dans lequel l'orge est préféré en tant que grain cru.

5. Procédé selon la revendication 1 à 4, présentant par ailleurs l'étape de l'ajout d'acide lactique au cours du mélange.

6. Procédé selon la revendication 1 à 5, dans lequel un arôme ou de l'acide ascorbique est ajouté au moût fermenté.

7. Procédé selon la revendication 1 à 6, présentant par ailleurs l'étape de la filtration du moût fermenté.

8. Procédé selon la revendication 1 à 7, présentant par ailleurs l'étape de la carbonisation du moût fermenté.

9. Procédé selon la revendication 1 à 8, présentant par ailleurs l'étape de la pasteurisation de la boisson.

10. Procédé selon la revendication 1 à 9, avant la transformation du malt en un moût, présentant par ailleurs l'étape du laminage du malt avec un moulin à cylindres, qui présente pour les types de malt respectifs les distances qui suivent :
| | |
|---|---|
| le malt Pilsner | 1,6 mm à 1,8 mm, de manière préférée 1,7 mm |
| l'orge | 0,9 mm à 1,1 mm, de manière préférée 1,0 mm, |
| le malt de seigle | 0,6 mm à 0,8 mm, de manière préférée 0,7 mm |
| le malt colorant | 1,6 mm à 1,8 mm, de manière préférée 1,7 mm. |

11. Procédé selon la revendication 1 à 10, présentant par ailleurs l'étape du trempage de l'orge dans de l'eau avant le broyage.

12. Procédé selon la revendication 1 à 11, présentant par ailleurs l'étape de l'ajout d'une enzyme aux fins de la décomposition de polymères.
